# EUROPÄISCHE PATENTSCHRIFT

(11) **EP 1 975 091 B1**
(45) Veröffentlichungstag und Bekanntmachung des Hinweises auf die Patenterteilung: **28.12.2011**
(21) Anmeldenummer: 08005607.0
(22) Anmeldetag: 26.03.2008
(51) Int. Cl.: B65G 1/137

(54) **Verfahren zum Kommissionieren von Gegenständen in Verpackungsschachteln**
Method for commissioning objects in packaging boxes
Procédé de commissionnement d'objets dans des boîtes d'emballage

(30) Priorität: 29.03.2007 DE 102007015029
(43) Veröffentlichungstag der Anmeldung: 01.10.2008
(73) Patentinhaber: Beer, Christian, 6858 Schwarzach (AT)
(72) Erfinder: Beer, Christian, 6858 Schwarzach (AT)
(74) Vertreter: Riebling, Peter

(56) Entgegenhaltungen:
- DE-A1- 10 136 354
- DE-A1-102008 014 110
- DE-U1- 9 407 577
- US-A1- 2004 247 421

## Beschreibung

Gegenstand der Erfindung ist ein Verfahren zum Kommissionieren und Verpacken von Gegenständen in Verpackungsschachteln . Nachdem immer mehr Bestellungen von Gegenständen über das Internet oder über Versandlager erfolgen, ist es notwendig, ein möglichst schnelles und kostengünstiges Verpackungsverfahren vorzuschlagen, mit dem es gelingt, unterschiedliche Gegenstände in einer Verpackungsschachtel zusammen-zuführen, um somit die Verpackungsschachtel möglichst schnell zu kommissionieren.

Bisher sind hierbei folgende Verfahren bekannt geworden:

In einer ersten Ausführungsform ist es bekannt, dass ein sogenannter Bestückungsroboter selbsttätig durch eine Vielzahl von Gassen eines Hochregallagers fährt, dort kommissionsgesteuert aus dem Hochregallager eine bestimmte Großkiste oder Palette entnimmt und diese zu einem Lagerplatz fährt.

Am Lagerplatz wird dann ein Gegenstand oder werden mehrere gleichartige Gegenstände aus der Kiste entnommen und die Großkiste wird dem Transportroboter wieder übergeben, der die Kiste in das Hochregallager verbringt.

Nachteil dieses bekannten Verfahrens ist, dass ein langsamer Verpackungsvorgang gegeben ist, weil der Bestückungsroboter immer volle, mit einer Vielzahl der gleichartigen Gegenstände gefüllten, Kisten oder Paletten aus dem Hochregallager entnehmen muss, um diese an einen Packplatz zu bringen, wo auftragsgesteuert nur ein geringer Teil der Gegenstände entnommen wird, wonach dann die genannte Kiste wieder in das Hochregallager gebracht wird. Es entsteht dadurch ein sehr großer Verkehr in den verschiedenen Lagergassen des Hochregalsystems und die Bestückungsroboter sind kostenaufwändig. Außerdem lässt die Bestückungsleistung für die den einzelnen Verpackungsschachteln zugeordneten Verpacker zu wünschen übrig, weil sie immer auf das Eintreffen eines Verpackungsroboters angewiesen sind. Im Übrigen wird auch ein hoher Platzbedarf vorausgesetzt, denn die dem Hochregallager zugeordneten Bestückungsroboter sind sehr aufwändige, teure und langsame Maschinen.

Weiterer Nachteil ist, dass bekannte Bestückungsroboter ununterbrochen, drahtgebunden oder bestenfalls drahtlos mit einem Zentralrechner verbunden sind und ununterbrochen ein Datenverkehr für Steuerungsaufgaben und Kommissionierungsaufträge zwischen dem Bestückungsroboter und dem Leitrechner notwendig ist.

In einer zweiten bekannten Ausführungsform ist es bekannt, dass ein Mitarbeiter einen PDA, einen Handscanner oder dergleichen mit sich führt und auf der Anzeige des PDA's der genaue Kommissionsauftrag enthalten ist. So ist auf dem Display z.B. zu entnehmen, dass er am Regallagerplatz Nummer 85 drei Gegenstände aus der Kiste Nummer 67 entnehmen muss. Sobald dies erfüllt ist, hakt der Benutzer diesen Kommissionsauftrag ab und weiß dann gleichzeitig, dass er am Regalplatz Nummer 58 auch noch der Kiste 56 drei Gegenstände entnehmen muss. Somit wird Punkt für Punkt der Kommissionsauftrag ausgeführt und abgehakt und sobald dieser fertiggestellt ist, kehrt der Bestücker zum Lagerplatz zurück, wo er seine fertig bestückte Verpackungsschachtel übergibt, die sofort dann für den Versand freigemacht werden kann.

Nachteil dieses zweiten Verfahrens ist der sehr hohe Laufverkehr in den einzelnen Regalgassen und das ungezielte Herumlaufen bzw. Fahren der Bestücker zu den einzelnen Lagerplätzen, die sich zum Teil gegenseitig behindern oder miteinander kollidieren. Damit ist eine große Laufarbeit bei geringer Bestückungsleistung gegeben.

Die DE 9407577 U1 offenbart ein Verfahren zum Kommissionieren und Verpacken von Gegenständen in Verpackungsschachteln aus einem Lager,
- wobei ein Transportroboter auf einem schienengebundenen Transportsystem über Schienenstrecken kommissionsgesteuert verfahrbar ist,
- wobei der Transportroboter zur gleichen Zeit mehrere Kommissionsaufträge dadurch ausführt, dass er mindestens zwei Transportkisten trägt, und jeder Transportkiste ein Kommissionsauftrag zugeordnet ist,
- wobei ein Bestücker mit mindestens einem Prüfgerät den Transportroboter begleitet, in Lagerkisten an dem Lagerplatz lagernde Gegenstände mittels Prüfgerät identifiziert und in mindestens eine Transportkiste auf dem Transportroboter ablegt, und
- wobei der Transportroboter die Transportkisten auftragsbezogen auf einem Packplatz verteilt abgibt.

Der Erfindung liegt deshalb die Aufgabe zugrunde, ein solches Verfahren so weiterzubilden, dass bei geringerem Raumbedarf eine wesentlich höhere Bestückungsleistung erzielt werden kann.

Die gestellte Aufgabe wird durch das Verfahren des Anspruchs 1 gelöst.

Wesentliches Merkmal der Erfindung ist, dass bei dem Verfahren ein schienengebundenes Transportsystem vorgesehen ist, auf dem eine Vielzahl von autonom arbeitenden, jeweils einen Kommissionsvorgang verarbeitenden Transportrobotern angeordnet ist und dass dieses Schienensystem sowohl den Bestückungsplätzen als auch den Packplätzen zugeordnet ist; ferner dass an den Bestückungsstationen ein Bestücker mit mindestens einem Handscanner oder einem drahtlosen Prüfgerät angeordnet ist, welches in der Lage ist, die einzelnen in den dortigen Lagerplätzen lagernden Lagerkisten zu identifizieren und der ferner einen drahtlos erhaltenen Kommissionsauftrag verarbeitet, indem er aus den Lagerkisten an dem Lagerplatz ihm von der Anzeige des Scanners angewiesene Gegenstände entnimmt, diese abscannt und in mindestens eine Kiste auf dem Transportroboter ablegt.

Mit der gegebenen technischen Lehre ergibt sich nun der Vorteil, dass eine wegoptimierte Bestückung dadurch erreicht wird, dass gleichzeitig verschiedene Bestückungsaufträge (Kommissionsaufträge) auf einem einzigen Transportroboter ausgeführt werden.

Der Bestücker arbeitet mit einem Handscanner, dessen Anzeige ihm den auftragsbezogenen Bestückungsauftrag für die auf dem Transportroboter ruhenden Transportkisten mitteilt. Der Bestücker begleitet deshalb nur den Transportroboter, der ihn zur dem betreffenden Regalplatz führt und die dort zu entnehmende Ware anzeigt.

Damit ergibt sich der Vorteil, dass der Bestücker aufgrund seiner Anzeige am Handscanner mit dem Transportroboter mitläuft und nur diese Waren aus dem Lagerregal entnimmt, die ihm vom Handscanner (und/oder von einer Anzeige am Transportroboter) als notwendig zur Entnahme angezeigt werden.
Der Bestücker scannt die aus der Lagerkiste entnommene Ware ab, und damit wird eine Rückmeldung an den Zentralrechner gesandt, dass die Ware tatsächlich entnommen wurde. Er legt die abgescannte Ware in eine von mehreren Transportkisten des Transportroboters ein, und zwar in die, die ihm als zu bestückende Transportkiste durch ein Lichtsignal, durch ein akustisches Signal oder durch eine andere Anzeige am Transportroboter angegeben wird. Die Intelligenz des Transportroboters erzeugt somit den Bestückungsauftrag durch optische oder akustische Signale für den Bestücker.

Wenn er im Display seines Handscanners erkennt, dass die jeweilige Transportkiste fertig bestückt ist, gibt er eine Fertigmeldung an den Transportroboter, indem er eine einfache Handbewegung durch eine Lichtschranke am Transportroboter macht oder indem er einen Druckknopf betätigt oder dergleichen mehr und der Transportroboter fährt selbsttätig - auftragsbezogen - zu dem nächsten Lagerplatz. Dort wird dem Bestücker wiederum durch Aufleuchten einer entsprechenden Anzeige an der Transportkiste zu erkennen gegeben, dass an dieser Stelle ein Bestückungsauftrag erforderlich ist. Diesen Bestückungsauftrag liest der Bestücker wiederum von seinem Display des Handscanners ab und bestückt diese Transportkiste mit den geforderten Gegenständen aus den Lagerkästen. Der gleiche Vorgang beginnt somit von vorne, wie dies eingangs bereits schon erläutert wurde.

Auf diese Weise ist jeweils nur ein Bestücker einer bestimmten Lagerstraße zugeordnet und legt nur Gegenstände in die Transportkisten der Transportroboter ein, die in dieser Lagerstraße zur Verfügung stehen.

Er begleitet somit den Transportroboter auf seinem Weg durch diese einzige Lagerstraße, wobei der Transportroboter ihm wie ein "folgsames Hündchen" folgt. Der Transportroboter kann natürlich auch dem Bestücker vorausfahren. Der Transportroboter fährt dabei nicht - wie beim Stand der Technik bekannt - auftragsbezogen, sondern Weg-optimiert. Der Begriff "auftragsbezogen" heißt, dass immer nur für einen Kunden ein kompletter Auftrag abgewickelt wird, was mit großer Laufarbeit zu den verschiedensten Regalplätzen verbunden ist.

Nach der Erfindung erfolgt jedoch eine wegoptimierte Verfahrensweise, was bedeutet, dass auf dem Transportroboter mehrere Kundenaufträge mit zugeordneten Kisten angeordnet sind und der Transportroboter nach den kürzesten Wegen verfährt. Wenn Kunde A, B und C in der gleichen Gasse einen Bestückungsauftrag wünschen, wird dieser für alle drei Kunden in dieser Gasse ausgeführt, indem der Transportroboter die Transportkisten A, B und C mit sich führt, die von dem Bestücker gleichzeitig oder nacheinander bestückt werden. Dies ist mit einer wesentlichen Einsparung von Wegen verbunden ist.

Damit ergeben sich wesentlich höhere Bestückungsleistungen, weil der Bestücker nur eine bestimmte Art von Gegenständen aus dem entsprechenden Lagerregal entnimmt und immer nur jeweils gleichartige Bestückungsvorgänge ausführt. Es reicht also aus, wenn der eine Bestücker eine Regalstraße von z. B. 50-150 Meter "verwaltet" (zu bestücken hat), weil er sukzessive vom Beginn bis zum Ende der Straße die durch den Handscanner angezeigten Gegenstände in die dort vorbeifahrenden und mitlaufenden Transportroboter einbringt.

Ist der Kommissionsauftrag jedoch so geartet, dass auch noch andersartige Gegenstände in die Transportkisten der Transportroboter gebracht werden müssen, so ist für das Verständnis der vorliegenden Erfindung wichtig, dass für jeden Packauftrag eine eigene Transportkiste verwendet wird.

Dies bedeutet, dass auf einem Transportroboter eine Mehrzahl von Transportkisten angeordnet sind, wobei jede Transportkiste nur für die Aufnahme gleichartiger Gegenstände (z.B. 40 Stück Schrauben M8 x 30) bestimmt ist. Die zweite Transportkiste hat dann z.B. 10 Stück Rillen-Kugellager.

Daraus folgt, dass die fertig bestückte Kiste auf dem Transportroboter zu einer Vielzahl von aneinanderliegenden Packstationen gebracht wird und diese einzige Kiste durch einen auf dem Transportroboter angeordneten Querförderer auf den Packplatz abgeschoben wird, so dass dieser Packplatz schon teilweise bestückt ist.

Fehlen diesem Packplatz jedoch noch weitere Gegenstände, wird so lange gewartet, bis ein anderer Transportroboter mit einer anderen Transportkiste, in welcher die zu bestückenden Gegenstände aus einer anderen Lagergasse entnommen wurden, vorbei kommt und diese Transportkiste auf dem gleichen Packplatz entleert. Auf diese Weise können eine Vielzahl von Transportrobotern mit darauf lagernden Transportkisten vorbeikommen und jeweils auftragsbezogen werden nur die Transportkisten dem Packplatz zugeordnet, die von dem Packplatz zugeordneten Kommissionierungsauftrag gefordert wurden.

Erst wenn der Packplatz vollständig mit allen geforderten Gegenständen bestückt wurde, wird der Lieferschein ausgedruckt und für den Packer ist dies das Signal, dass der Packplatz nun voll bestückt ist und er kann die auf dem Packplatz liegenden Gegenstände nun in eine zugeordnete Verpackungsschachtel einlegen und den ausgedruckten Lieferschein hinzufügen.

Aus der kurzen Beschreibung des erfindungsgemäßen Verfahrens ergibt sich somit, dass eine wegeoptimierte Kommissionierung zur Verpackung von Gegenständen in Verpackungsschachteln vorgeschlagen wird, weil die jeweils den einzelnen Regalgassen zugeordneten Bestücker nur jeweils gleichartige Waren und Gegenstände auf die zugeordneten Transportkisten einladen und diese Bestückungsleistung von einem drahtlos gesteuerten Handscanner veranlasst wird.

Damit haben die einzelnen Bestücker nur geringe Laufwege und hohe Bestückungsleistungen.

Natürlich können die menschlichen Bestücker und Packer auch die Roboter oder andere automatisierten Vorrichtungen ersetzt werden.

Weiterer wesentlicher Vorteil ist, dass die Transportroboter autonom arbeiten. Dies bedeutet, dass dieser beim Start auf der Schienenstrecke einen Fahrauftrag mit gegebenenfalls einer Mehrzahl von Kommissionierungsaufträgen erhält und diesen Auftrag völlig selbstständig abarbeitet, ohne mit dem Leitrechner in der Zwischenzeit vor Beendigung des gesamten Auftrages in Kontakt treten zu müssen. Damit wird der Funk- und Datenverkehr zwischen Leitrechner und Transportroboter entscheidend minimiert, was zu einer Verbesserung der Fahrleistung und Bestückungsleistung, sowie einer Minimierung der Verwaltungsaufgaben führt. Es handelt sich also um autonom arbeitende Transportroboter mit eigener "Intelligenz".

Die Aufgabe der Erfindung wird auch das Verfahren des Anspruchs 10 gelöst, wobei folgende Schritte durchlaufen werden:
1. Werkstückträger nimmt Fahrauftrag an
2. Werkstückträger fährt zu den Bestückungsstationen
3. Dort lädt der Packer die Kiste des Werkstückträgers laut Bestückungsauftrag am Handscanner
4. Ladevorgang laut Scanner-Anzeige beendet und Werkstückträger fährt zum Packplatz
5. Am Packplatz wird die gefüllte Kiste abgeladen
6. Prüfung, ob der Packplatz alle Gegenstände hat
7. Werkstückträger verlässt Packplatz und meldet sich am Zentralrechner zurück
8. Packplatz wartet auf weitere bestückte Werkstückträger
9. Sobald der Packplatz fertig bestückt ist, druckt der Drucker den Lieferschein als Zeichen der fertigen Bestückung aus
10. Packer entnimmt aus den Kisten des Packplatzes die Gegenstände und legt sie in eine Schachtel
11. In die Schachtel wird der Lieferschein gelegt und die Schachtel auf ein Transportband gestellt
12. Packer stellt die leeren Kisten auf ein Förderband, von dort werden die leeren Kisten auf einen Transportroboter aufgeschoben, um einen Neuauftrag zu beginnen.

Im Folgenden wird die Erfindung anhand von mehrere Ausführungswege darstellenden Zeichnungen näher erläutert.

Es zeigen:
- Figur 1:: die Draufsicht auf ein Schienensystem zur Ausführung des Verfahrens
- Figur 2:: perspektivische Darstellung einer Bestückungsstation
- Figur 3:: perspektivische Darstellung einer Packstation
- Figur 4:: die Darstellung des Zentralrechners mit dem Zusammenspiel mit Handscannern
- Figur 5:: perspektivische Ansicht eines Transportroboters vor Übernahme der Daten des Zentralrechners
- Figur 6:: die Draufsicht auf einen Transportroboter mit 4 zu bestückenden Transportkisten
- Figur 7:: ein Beispiel für die Anzeige an einem Handscanner
- Figur 8:: schematisiert die Darstellung der Weiterleitung eines Bearbeitungsauftrages vom Zentralrechner

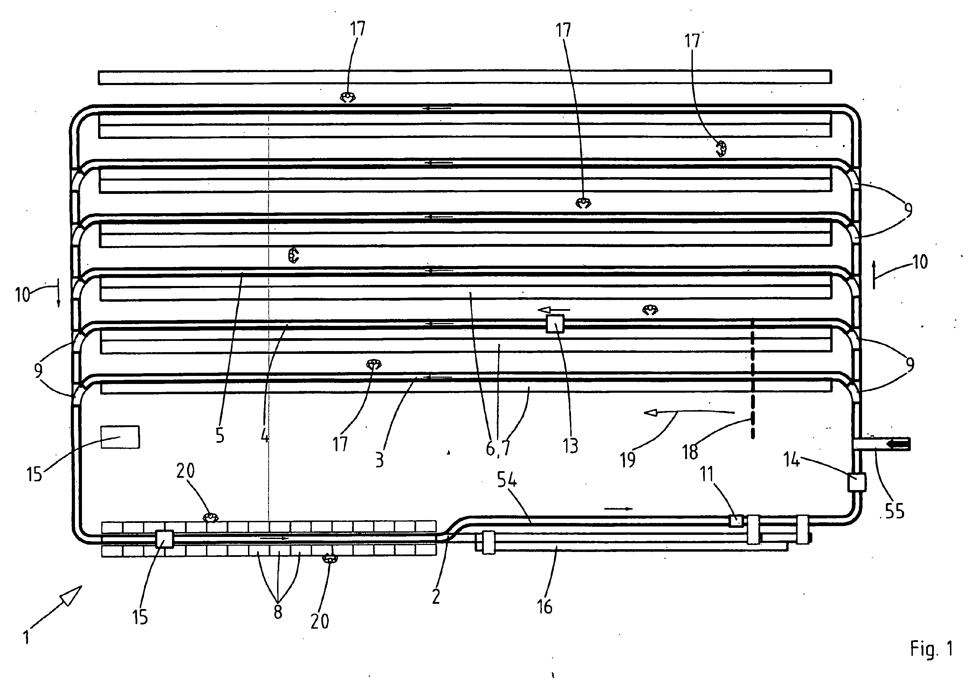

In Figur 1 ist allgemein ein Schienensystem 1 dargestellt, welches aus einer Vielzahl von parallel zueinander geführten Schienenstrecken 2, 3, 4, 5 besteht. Die Schienenstrecken 2-5 sind durch entsprechende Weichen voneinander abgeteilt und diese Weichen werden durch die auf den Schienenstrecken 2-5 verfahrbaren Transportroboter 12, 13, 14 entsprechend dem eingespeicherten Fahrauftrag gesteuert.

Jeder Transportroboter hat eine eigene Intelligenz, wobei in einem zugeordneten Mikroprozessor ein Fahrprogramm eingespeichert ist, welches der Transportroboter 12-14 von einem Zentralrechner 15 erhält.

Die Einspeicherung erfolgt drahtlos über eine Datenübergabestation 11. Die Transportroboter 12-14 verfahren beispielsweise in Pfeilrichtungen 10 entlang des Schienensystems 1.

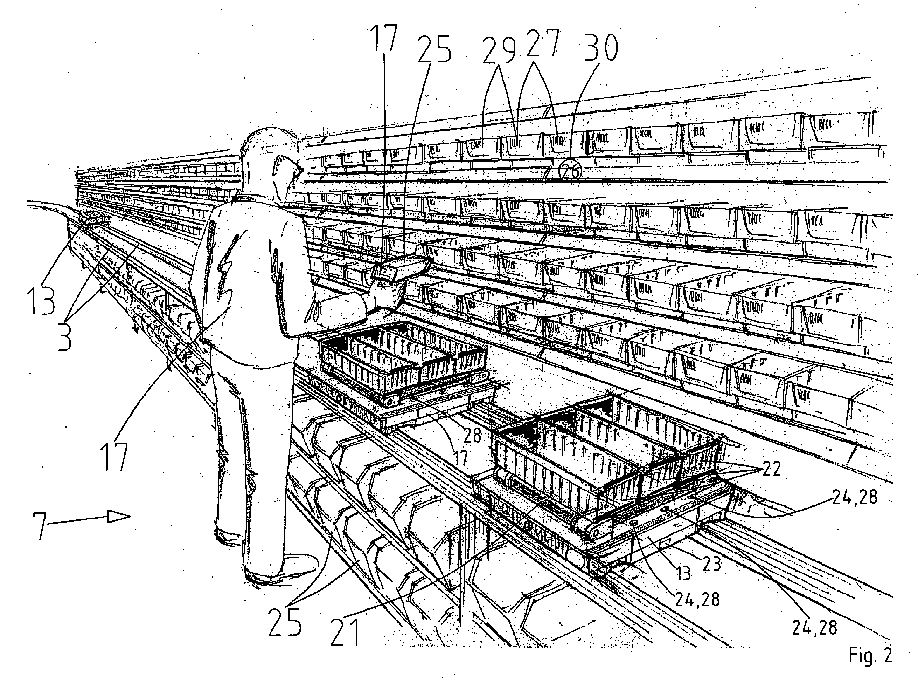

Entlang der Schienenstrecken 2-5 sind eine Vielzahl von Regalplätzen 6 angeordnet, in denen Lagerkisten 29 (s. Figur 2) angeordnet sind, an deren Vorderseiten jeweils Barcode-Etiketten 27 angeordnet sind. Jede Lagerkiste 29 enthält eine Vielzahl gleichartiger Gegenstände. Jeder Lagerkiste 29 ist durch eine Lagerplatz-Nummer 30 gekennzeichnet.

Im Bereich der Regalplätze 6 sind somit eine Vielzahl von Bestückungsstationen 7 auf den zueinander parallelen Schienenstrecken 3-5 definiert und diese Schienenstrecken laufen in eine gemeinsame, zentrale Schienenstrecke 2 ein, wo eine Vielzahl von hintereinanderliegenden Packplätzen 8 definiert sind.

Am Ausgang der Packplätze 8 ist eine Vereinzelungsstrecke 16 angeordnet, auf der die großen und kleinen Transportkisten 22 (s. Figur 2) aussortiert werden, um so den einzelnen Transportrobotern 12-14 eine bestimmte Anzahl von Transportkisten 22 wieder aufladen zu können.

Die einzelnen Transportroboter 12-14 starten also am Ausgang der Vereinzelungsstrecke 16 mit darauf lagernden, jedoch leeren Transportkisten 22 und übernehmen an der Datenübergabestation 11 die entsprechenden Kommissionierungsaufträge.

Am Beispiel der Schienenstrecke 3 wird anhand der Figur 2 Näheres erläutert.

Der Bestückungsauftrag lautet beispielsweise der Gestalt, dass bei Position 18 der in Figur 2 direkt vor dem Bestücker 17 dargestellte Transportroboter 13 stehen bleibt und auf seiner der vorderen Transportkiste 22 zugeordneten Positionsanzeige 24 durch Aufleuchten einer Lichtanzeige 28 zu verstehen gibt, dass die vorderste Transportkiste 22 zu bestücken ist.

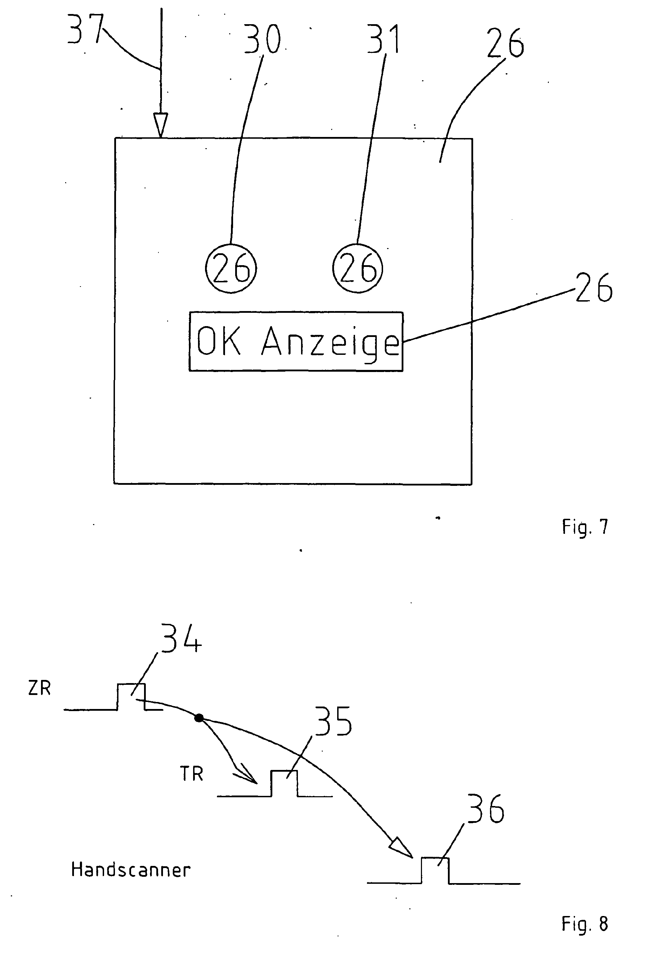

Der Bestücker 17 liest nun von seinem Scanner 25 das Display 26 ab und erhält beispielsweise eine Anzeige, wie sie in Figur 7 dargestellt ist. Dort erkennt er, dass er am Lagerplatz 30 (in der Zeichnung mit der Nummer 26 versehen) eine Teileanzahl 31 mit beispielsweise 21 Stück entnehmen muss.

Jedes Stück, welches er aus einer Lagerkiste 29 entnimmt, scannt er mit seinem Scanner 25 ab und dementsprechend wird die Anzahl der entnommenen Teile auf dem Display verringert, bis die Anzeige 31 auf "Null" gesetzt ist. Er erhält dann mit der OK-Anzeige 33 das Signal, dass der Bestückungsauftrag der Transportkiste 22 an dieser Stelle beendet ist. Dies teilt der Handscanner über eine drahtlose Datenverbindung dem Zentralrechner 15 mit.

Nach der Beendigung dieses Bestückungsauftrages fährt der Bestücker 17 beispielsweise mit der Hand durch eine Lichtschranke 53 und bringt somit die Lichtanzeige 28 an der Positionsanzeige 24 zu Erlöschen.

Sollte noch ein anderes Licht bei der Positionsanzeige 24 an einer anderen Transportkiste 22 leuchten, dann drückt er wieder auf seinen Handscanner und liest den weiteren Bestückungsauftrag ab. Es läuft dann derselbe Vorgang ab, wie vorher angegeben.

Die Figur 2 zeigt, dass die Lagerkisten 29 nicht nur in einem Regal angeordnet werden können, sondern auch fußseitig angeordnet sind.

Ferner zeigt die Figur 2, dass die einzelnen Transportkisten 22 parallel zueinander und etwa gleich groß ausgebildet sind und gemeinsam auf einem Querförderer 21 ruhen.

Es kann selbstverständlich auch eine einzige Transportkiste 22 vorgesehen sein.

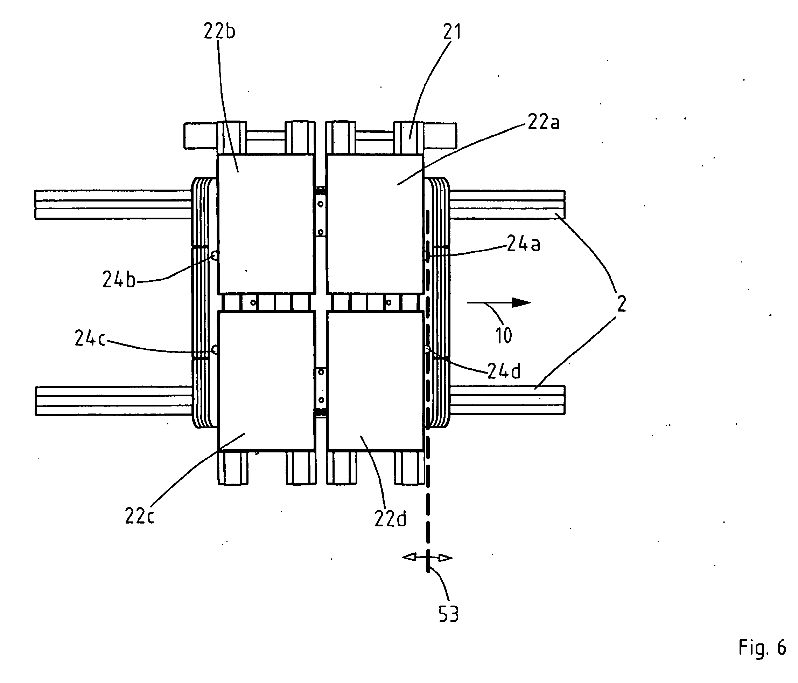

Gemäß Figur 6 sind jedoch hierbei gleichartige Transportkisten 22 vorgesehen, wobei jeder Transportkiste eine Positionsanzeige 24 zugeordnet ist, die mitteilt, ob die Transportkiste voll bestückt ist oder nicht.

Sobald der Transportroboter bei der Position 18 seine fertig bestückte Position verlassen hat, fährt er in Pfeilrichtung 19 entlang der Schienenstrecke 3 weiter und bleibt bei einer neuen Regalposition der Schienenstrecke 3 stehen. Dort findet dann derselbe Vorgang statt, wie vorhin beschrieben.

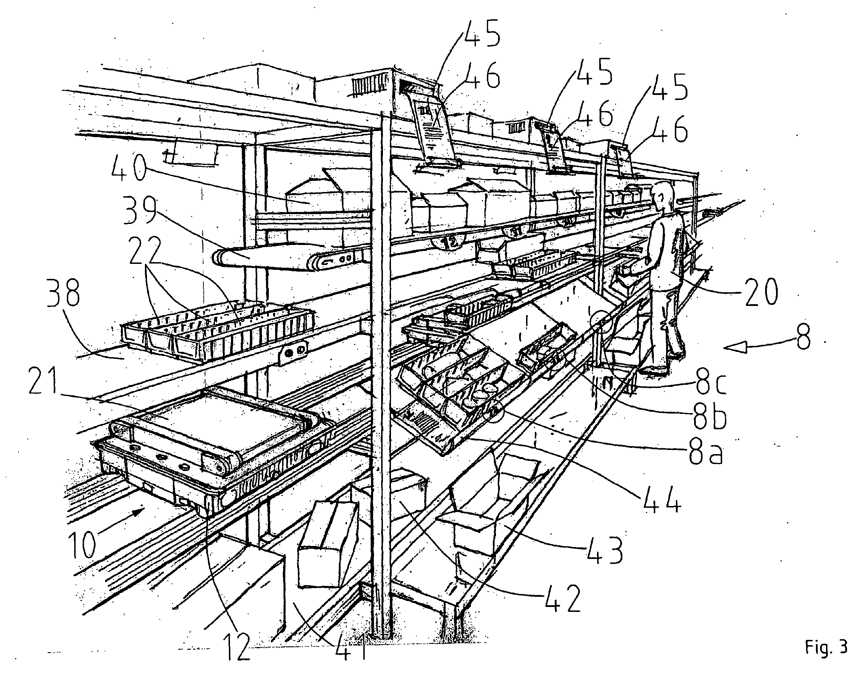

Sobald der Bestücker 17 an der Schienstrecke 3 alle Kommissionierungsaufträge ausgeführt hat, fährt der Transportroboter mit seinen darauf lagernden Transportkisten (einige dieser Kisten können auch leer sein) in Pfeilrichtung 10 zu den Packplätzen 8, wo eine Vielzahl von aneinander angeordneten Packstationen vorgesehen ist. Dies ist in Figur 3 näher dargestellt. Dort ist erkennbar, dass die in Pfeilrichtung 10 eintreffenden Transportroboter alle entladen werden. In Figur 3 wurde der vorne sichtbare Transportroboter bereits schon entladen, so dass dessen Querförderer 21 bereits schon leer ist. Die anderen Transportroboter, die sich dahinter anschließen, werden jedoch gerade entladen. Es ist erkennbar, dass der Querförderer 21 die darauf lagernden Transportkisten 22 in eine schräg verlaufende und in Förderrichtung unter dem Transportroboter angeordnete Packplattform 44 abkippt, wo die einzelnen Transportkisten 22 für diesen Packauftrag am Packplatz 8a versammelt werden.

Dies bedeutet, dass jeder Transportroboter nur eine bestimmte Art einer Transportkiste mit einer bestimmten Anzahl eines Gegenstandes dort abkippt und dass auf dem Packplatz alle unterschiedliche Gegenstände enthaltende Transportkisten abgepackt werden. Es fahren also eine Vielzahl von Transportrobotern an jedem Packplatz 8a, 8b, 8c, vorbei und entsprechend dem Kommissionierungsauftrag wird der Querförderer 21 so von dem jeweiligen Transportroboter angesteuert, dass nur jeweils die diesem Packplatz 8a, b, c zugeordnete Transportkiste 22 auf den zugeordneten Packplatz abgekippt wird.

Auf diese Weise werden auf dem Packplatz 8 nur alle zu einem Verpackungsauftrag zusammengehörenden Gegenstände versammelt.

Der Packer 20 nimmt nun für jeden Packplatz 8 die in den Transportkisten 22 lagernden Gegenstände heraus und legt diese in die darunter liegenden Verpackungsschachteln 43 ein.

Hat er alle Gegenstände aus den Transportkisten 22 entnommen, wird automatisch aus oberhalb angeordneten Druckern 45 ein Lieferschein 46 erzeugt. Der Lieferschein 46 wird dann erzeugt, wenn der Zentralrechner am Ende der Schienenstrecke 2 im Bereich der Vereinzelungsstrecke 16 erfährt, dass der Transportroboter erfolgreich seine Transportkiste 22 abgeliefert hat und der letzte Transportroboter auch die dem jeweiligen Packplatz zugeordnete letzte Transportkiste entladen hat.

Der Verpacker 20 nimmt dann die jeweilige, nun entleerte Transportkiste und legt sie auf ein darüber angeordnetes Transportband 38, wo die einzelnen Transportkisten 22 entlang der Vereinzelungsstrecke 16 vorgefahren werden und dort wieder auf die Transportroboter 12-14 aufgeladen werden.

Auf dem darüber angeordneten Transportband 39 werden die leeren Verpackungsschachteln 40 angeliefert.

Nachdem der Packer nun die Verpackungsschachteln 43 fertig bestückt hat, legt er diese auf ein unteres Transportband 41, nachdem er vorher den Lieferschein 46 eingelegt hatte und die auf dem Transportband 41 weggeförderten Verpackungsschachteln sind nun versandfertig.

Es wird noch erwähnt, dass die einzelnen Transportroboter an ihren vorderen Stirnseiten eine Anzahl von Sensoren und Reflektoren aufweisen, wobei nur in Figur 2 beispielhaft ein Reflektor 23 gezeichnet ist. Es sind sowohl Abstandssensoren vorhanden, welche den gegenseitigen Abstand zwischen hintereinanderfahrenden Transportrobotern 12, 13 erfassen, um einen Zusammenstoß zwischen den Transportrobotern zu vermeiden. Ebenso sind IR-Empfänger vorhanden, welche die entsprechenden Daten drahtlos empfangen und in den internen Mikroprozessor einspeichern.

Jeder Transportroboter 12-14 ist ein vollkommen autonom arbeitendes Objekt, weil es einen eigenen Mikroprozessor, eine eigene Energieversorgung und jeweils einen autonom arbeitenden Querförderer 21 aufweist.

Der Querförderer 21 wird selbstverständlich auch durch die Energieversorgung des Transportroboters mitversorgt.

Ebenso kann es vorgesehen sein, dass neben dem Querförderer oder auf dem Querförderer noch weitere Bestückungseinheiten angeordnet sind, wie z. B. mitfahrende Bestückungsroboter und dergleichen mehr.

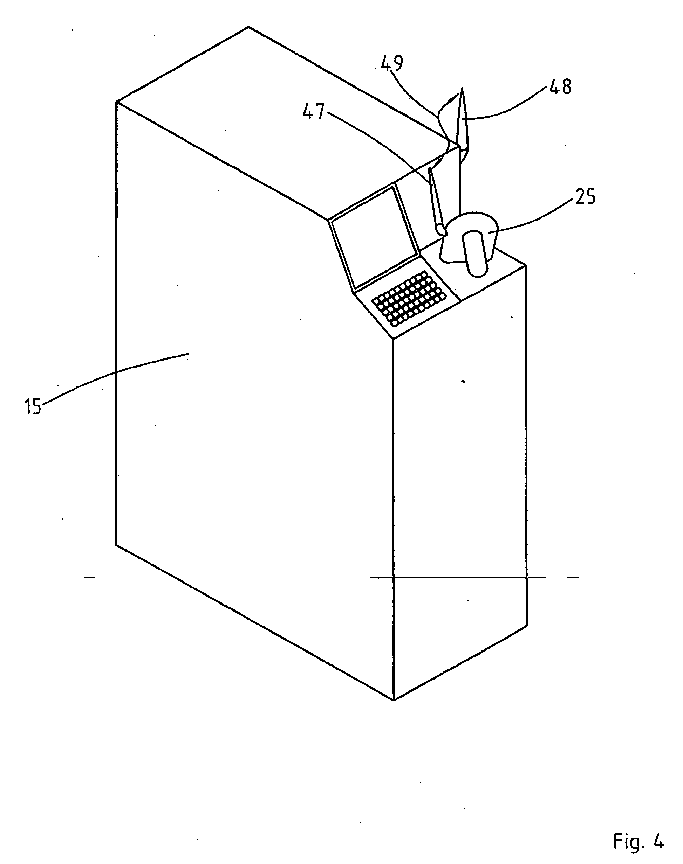

Die Figur 4 zeigt als Beispiel einen Zentralrechner 15 der über eine drahtlose Datenverbindung und seine Antenne 48 das entsprechende Kommissionsprogramm in den Scanner 25 über dessen Antenne 47 einlädt.

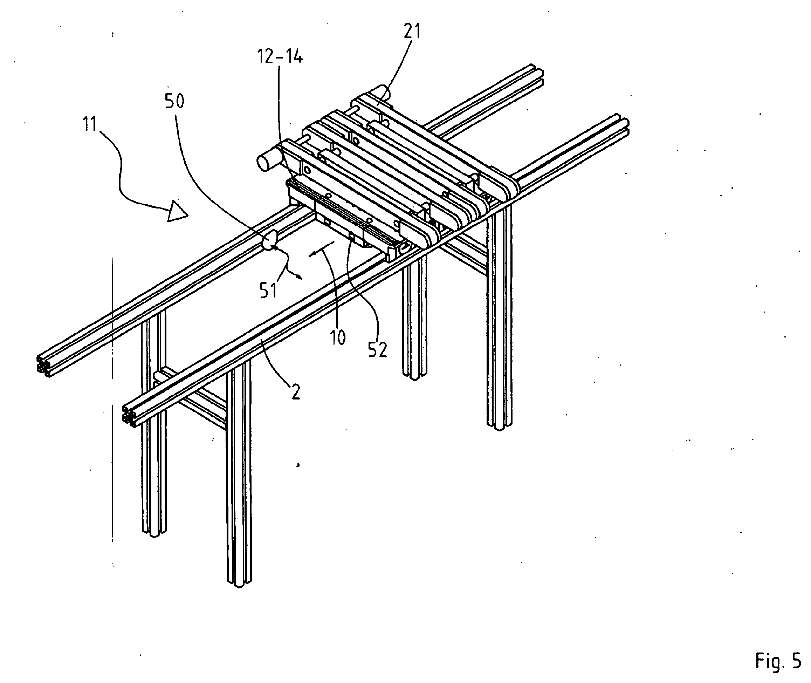

In Figur 5 ist eine drahtlose Datenübertragung auf einen Transportroboter dargestellt. Erkennbar ist zunächst, dass der Querförderer 21 aus einzelnen Transportbändern besteht, die in ihrer Förderrichtung senkrecht zur Fahrtrichtung (Pfeilrichtung 10) des Transportroboters angeordnet sind.

Im Bereich des Schienensystems 1 ist bevorzugt bei der Datenübergabestation 11 eine IR-Schnittstelle 50 angeordnet, über welche die Daten drahtlos von einem zugeordneten IR-Empfänger am Transportroboter 12-14 empfangen werden.

Statt eines IR-Sende- und Empfangsstrahls 51 können selbstverständlich auch Funkwellen verwendet werden.

Auch dort ist ein Reflektor 52 dargestellt, der - wie auch der vorige Reflektor 23 - für die Abstandsmessung und den Datenverkehr mit anderen Datenquellen verantwortlich ist.

Der Zentralrechner erzeugt somit auch einen Eingangs-Datenstrom 37 an dem Scanner 25, wie dies in Figur 7 dargestellt ist.

Die Verarbeitung eines Bearbeitungsauftrages 34, der vom Zentralrechner 15 erzeugt wurde, erfolgt gemäß Figur 8. Dort ist erkennbar, dass dieser Bearbeitungsauftrag 34 als Fahrauftrag 35 dem jeweiligen Transportroboter eingespeist wird. Gleichzeitig wird dieser Bearbeitungsauftrag 34 auch in Form eines Display-Auftrages 36 an den Handscanner weitergeleitet. Somit erfolgt eine Synchronisierung des Bearbeitungsauftrages zwischen dem Transportroboter und dem Handscanner.

In gleicher Weise, wie die Bestückung der einzelnen Transportkisten 22 erfolgt, wird auch eine Auffüllung des Lagers vorgesehen. Hierzu werden Transportroboter mit gefüllten Lagerkisten über die Einlaufstrecke 55 in das Schienensystem 1 eingeschleust und fahren zu den verschiedenen Lagerplätzen 30.

In der gleichen Weise wie dies anhand der Transportkisten 22 erläutert wurde, kann nun der Bestücker 17 die gefüllten Lagerkisten 29 von dem Transportroboter entnehmen und entsprechend seiner Scanneranzeige in den zugeordneten Lagerplatz 30 verbringen.

Es wurde eingangs schon darauf hingewiesen, dass im Bereich der Pufferstrecke 54 die leeren Transportroboter 12-14 auflaufen und auf neue Aufträge warten.

Wichtig bei der vorliegenden Erfindung ist somit, dass jeder Schienenstrecke 3, 4, 5 ein eigener Bestücker 17 zugeordnet ist (s. Figur 1), der nur entlang dieser einen Gasse gleichartige Bestückungsaufträge ausführt und der dieser Schienstrecke momentan zugeordneter Transportroboter dem Bestücker wie ein "Hündchen" folgt und an der Stelle jeweils stehen bleibt, wo ein Bestückungsauftrag zu erledigen ist. Der Bestücker 17 muss deshalb nur sukzessive von der Position 18 fortschreitend in Pfeilrichtung 19 die Schienenstrecke 3, 4, 5 ablaufen und kann somit auf besonders schnelle und einfache Weise alle Bestückungsaufträge für die jeweilige Transportkiste 22 erfüllen.

Daraus ergibt sich eine sehr hohe Bestückungsleistung bei geringen Laufstrecken für den Bestücker.

### Zeichnungslegende

- 1: Schienensystem
- 2: Schienenstrecke
- 3: Schienenstrecke
- 4: Schienenstrecke
- 5: Schienenstrecke
- 6: Regalplatz
- 7: Bestückungsstation
- 8: Packplatz
- 9: Weiche
- 10: Pfeilrichtung
- 11: Datenübergabestation
- 12: Transportroboter
- 13: Transportroboter
- 14: Transportroboter
- 15: Zentralrechner
- 16: Vereinzelungsstrecke
- 17: Bestücker
- 18: Position
- 19: Pfeilrichtung
- 20: Packer
- 21: Querförderer
- 22: Transportkiste
- 23: Reflektor
- 24: Positionsanzeige
- 25: Scanner
- 26: Display
- 27: Barcode-Etikett
- 28: Lichtanzeige
- 29: Lagerkiste
- 30: Lagerplatz-Nr.
- 31: Teileanzahl
- 32: Kiste
- 33: OK-Anzeige
- 34: Bearbeitungsauftrag
- 35: Fahrauftrag
- 36: Display-Auftrag
- 37: Eingang
- 38: Transportband
- 39: Transportband
- 40: Verpackungsschachteln
- 41: Transportband
- 42: Verpackungsschachtel
- 43: Verpackungsschachtel
- 44: Packplattform
- 45: Drucker
- 46: Lieferschein
- 47: Antenne
- 48: Antenne
- 49: Übertragung
- 50: IR-Schnittstelle
- 51: Sender + Empfangsteil
- 52: Reflektor
- 53: Lichtschranke
- 54: Pufferstrecke
- 55: Einlaufstrecke

## Patentansprüche

1. Verfahren zum Kommissionieren und Verpacken von Gegenständen in Verpackungsschachteln (42, 43) aus einem Lager,
1. 1 wobei mehrere Transportroboter (12-14) auf einem schienengebundenen Transportsystem (1) über Schienenstrecken (2-5) kommissionsgesteuert verfahrbar sind,
1. 2. und jeder Transportroboter (12-14) zur gleichen Zeit mehrere Kommissionsaufträge **dadurch** ausführt, dass er mindestens zwei Transportkisten (22) trägt, und jeder Transportkiste ein Kommissionsauftrag zugeordnet ist,
1.3 wobei jeder Transportroboter (12-14) von einem Zentralrechner kommissionsgesteuert einen Regalplatz (6) anfährt und
1.4 ein Bestücker (17) mit mindestens einem drahtlosen Prüfgerät (25, 26) den Transportroboter begleitet
1.5 und entsprechend der Anzeige auf seinem Prüfgerät aus Lagerkisten (29) an dem Lagerplatz (30) Gegenstände entnimmt,
1.6 diese mittels Prüfgerät (25, 26) identifiziert und in mindestens eine Transportkiste (22) auf dem Transportroboter (12-14) ablegt,
1.7 und der Transportroboter die Transportkisten auftragsbezogen auf einem Packplatz verteilt abgibt.

2. Verfahren nach Anspruch 1, **dadurch gekennzeichnet, dass** der Transportroboter die Kommissionsaufträge wegoptimiert abarbeitet und auftragsbezogen auf dem jeweiligen Packplatz (8) verteilt.

3. Verfahren nach Anspruch 2, **dadurch gekennzeichnet, dass** die wegeoptimierte Kommissionierung zur Verpackung von Gegenständen in Verpackungsschachteln **dadurch** erfolgt, dass die jeweils den einzelnen Regalgassen zugeordneten Bestücker nur jeweils gleichartige Waren und Gegenstände, die unterschiedlichen Kommissionsaufträgen zugeordnet sind, und die in dieser Regalgasse vorhanden sind, auf die zugeordneten Transportkisten einladen und die Transportroboter die Transportkisten auftragsbezogen auf einem Packplatz verteilt abgeben.

4. Verfahren nach einem der Ansprüche 1 bis 3, **dadurch gekennzeichnet, dass** das drahtlose Prüfgerät (25, 26) ein Scanner, insbesondere Handscanner (25) mit Anzeige (26) ist.

5. Verfahren nach einem der Ansprüche 1 bis 4, **dadurch gekennzeichnet, dass** der Transportroboter (12-15) mittels Handbewegung des Bestückers (17) durch eine Lichtschranke (53) am Transportroboter (12-15) oder durch Betätigen eines Druckknopfes des Bestückers (17) aktiviert wird.

6. Verfahren nach einem der Ansprüche 1 bis 5, **dadurch gekennzeichnet, dass** der Transportroboter (12-15) durch Aufleuchten einer entsprechenden Anzeige (28) im Bereich der darauf aufgelegten Transportkiste (22) zu erkennen gibt, dass an dieser Stelle ein Bestückungsauftrag erforderlich ist.

7. Verfahren nach einem der Ansprüche 1 bis 6, **dadurch gekennzeichnet, dass** pro Transportroboter (12-15) mehrere Transportkisten (22) vorhanden sind, die jede für einen einzigen Kommissionsauftrag vorgesehen sind, welche die gleichen oder auch unterschiedliche Kommissionsaufträge sein können.

8. Verfahren nach einem der Ansprüche 1 bis 7, **dadurch gekennzeichnet, dass** mehrere fertig bestückte Transportkisten (22) auf mehreren unterschiedlichen Transportrobotern (12-15) zu einer einzigen Packstation (8) gebracht werden und diese Transportkisten (22) durch einen auf den Transportrobotern (12-15) angeordneten Querförderer (21) auf den Packplatz (8a, 8b, 8c) abgekippt werden, bei dem ein Packer (20) vorhanden ist.

9. Verfahren nach einem der Ansprüche 1 bis 8, **dadurch gekennzeichnet, dass** wenn der Packplatz (8a, 8b, 8c) vollständig mit allen geforderten Gegenständen bestückt wurde, wird der Lieferschein (46) durch einen Drucker (45) ausgedruckt und der Packer (20) legt die auf dem Packplatz (8a, 8b, 8c) liegenden Gegenstände in eine zugeordnete Verpackungsschachtel (42, 43) ein und fügt den ausgedruckten Lieferschein (46) hinzu.

10. Verfahren zum Kommissionieren und Verpacken von Gegenständen in Verpackungsschachteln (42, 43) aus einem Lager, wobei Transportroboter (12-14) auf einem schienengebundenen Transportsystem (1) mit Schienenstrecken (2-5) kommissionsgesteuert verfahrbar sind, wobei die Transportroboter (12-14) einen Regalplatz (6) anfahren und dort die Gegenstände abholen und zu einem Packplatz (8) bringen, wobei zwischen Regalplatz (6) und Packplatz (8) ein Bestückungsplatz (7) vorgesehen ist, wobei folgende Schritte durchlaufen werden:
a) Transportroboter (12-14) nimmt Fahrauftrag vom Zentralrechner an
b) Transportroboter (12-14) fährt zu den Bestückungsstationen (7),
c) Dort lädt der Bestücker (17) die Kiste (22) des Transportroboters (12-14) laut Bestückungsauftrag am Handscanner (25)
d) Ladevorgang laut Scanner-Anzeige (26) beendet und Transportroboter (12-14) fährt zum Packplatz (8)
e) Am Packplatz (8) wird die gefüllte Kiste (22) abgeladen
f) Prüfung, ob der Packplatz (8) alle Gegenstände hat
g) Transportroboter (12-14) verlässt Packplatz (8) und meldet sich am Zentralrechner (15) zurück
h) Packplatz (8) wartet auf weitere bestückte Transportroboter (12-14)
i) Falls Packplatz (8) fertig bestückt, dann druckt der Drucker (45) den Lieferschein (46) als Zeichen der fertigen Bestückung aus
j) Packer (20) entnimmt aus den Kisten des Packplatzes (8) die Gegenstände und legt sie in eine Schachtel (42, 43)
k) In die Schachtel (42, 43) wird der Lieferschein (46) gelegt und die Schachtel (42, 43) auf ein Transportband (38) gestellt
l) Packer (20) stellt die leeren Kisten (22) auf ein Förderband, die auf einen Transportroboter (12-14) zum Start eines Neuauftrages aufgeschoben werden.

## Claims

1. Method for commissioning and packing items in packing boxes (42, 43) from a store,
1. 1 wherein a plurality of transporting robots (12 to 14) can be moved with commissioning control on a rail-linked transporting system (1) via rail tracks (2 to 5),
1.2 and each transporting robot (12 to 14) carries out a plurality of commissioning orders at the same time in that it carries at least two transporting cases (22), and each transporting case is assigned a commissioning order,
1.3 wherein each transporting robot (12 to 14) approaches a rack position (6), with commissioning control by a central computer and
1.4 a loader (17) with at least one wireless test device (25, 26) accompanies the transporting robot
1.5 and removes items in accordance with the display on his test device from storage cases (29) at the storage position (30),
1.6 identifies these by means of the test device (25, 26) and deposits them in at least one transporting case (22) on the transporting robot (12 to 14),
1.7 and the transporting robot deposits the transporting cases in relation to the order distributed on a packing position.

2. Method according to claim 1, **characterised in that** the transporting robot processes the commissioning orders with path optimisation and distributes them in relation to the order on the respective packing position (8).

3. Method according to claim 2, **characterised in that** the path-optimised commissioning for packing items in packing boxes takes place **in that** the loader assigned to the individual rack passages in each case only load respective goods and items of the same type, which are assigned to different commissioning orders and are present in this rack passage, onto the associated transporting cases and the transporting robots deposit the transporting cases in relation to the order distributed on a packing position.

4. Method according to any one of claims 1 to 3, **characterised in that** the wireless testing device (25, 26) is a scanner, in particular a hand scanner (25) with a display (26).

5. Method according to any one of claims 1 to 4, **characterised in that** the transporting robot (12 to 15) is activated by means of a hand movement of the loader (17) by means of a photoelectric barrier (53) on the transport robot (12 to 15) or by actuating a push button of the loader (17).

6. Method according to any one of claims 1 to 5, **characterised in that** the transporting robot (12 to 15) indicates by illuminating a corresponding display (28) in the region of the transporting case (22) located thereon that a loading order is required at this point.

7. Method according to any one of claims 1 to 6, **characterised in that** a plurality of transporting cases (22) are present per transporting robot (12 to 15), each of which transporting cases is provided for a single commissioning order, which may be the same or different commissioning orders.

8. Method according to any one of claims 1 to 7, **characterised in that** a plurality of completely loaded transporting cases (22) are brought on a plurality of different transporting robots (12 to 15) to a single packing station (8) and these transporting cases (22) are tipped by a transverse conveyor (21) arranged on the transporting robots (12 to 15) onto the packing position (8a, 8b, 8c), at which a packer (20) is present.

9. Method according to any one of claims 1 to 8, **characterised in that** when the packing position (8a, 8b, 8c) has been completely loaded with all the required items, the delivery note (46) is printed out by a printer (45) and the packer (20) places the items located on the packing position (8a, 8b, 8c) in an assigned packing box (42, 43) and adds the printed delivery note (46).

10. Method for commissioning and packing items in packing boxes (42, 43) from a store, wherein transporting robots (12 to 14) can be moved with commissioning control on a rail-linked transporting system (1) with rail tracks (2 to 5), wherein the transporting robots (12 to 14) approach a rack position (6) and fetch the items there and bring them to a packing position (8), a loading position (7) being provided between the rack position (6) and packing position (8), the following steps being run through:
a) the transporting robot (12 to 14) receives the travelling order from the central computer
b) the transporting robot (12 to 14) travels to the loading stations (7)
c) the loader (17) loads the case (22) of the transporting robot (12 to 14) in accordance with the loading order at the hand scanner (25)
d) the loading process according to the scanner display (26) is ended and the transporting robot (12 to 14) travels to the packing position (8)
e) at the packing position (8), the filled case (22) is unloaded
f) check whether the packing position (8) has all the items
g) the transporting robot (12 to 14) leaves the packing position (8) and reports back to the central computer (15)
h) the packing position (8) waits for further loaded transporting robots (12 to 14)
i) if the packing position (8) is completely loaded, the printer (45) prints the delivery note (46) as a sign of the completed loading
j) the packer (20) removes the items from the cases of the packing position (8) and places them in a box (42, 43)
k) the delivery note (46) is placed in the boxes (42, 43) and the boxes (42, 43) are placed on a transporting belt (38)
l) the packer (20) places the empty boxes (22) on a conveyor belt and these are pushed onto a transporting robot (12 to 14) to start a new order.

## Revendications

1. Procédé pour préparer les commandes et emballer des objets dans des boîtes d'emballage (42, 43) à partir d'un stock,
1.1 étant précisé que plusieurs robots de transport (12-14) sont aptes à se déplacer, en étant commandés en fonction de la préparation des commandes, sur un système de transport sur rails (1) sur des tronçons de rails (2-5), 1.2 et que chaque robot de transport (12-14) exécute en même temps plusieurs ordres de préparation de commande grâce au fait qu'il porte au moins deux caisses de transport (22) et qu'un ordre de préparation de commande est attribué à chaque caisse de transport,
1.3 étant précisé que chaque robot de transport (12-14), en étant commandé par un ordinateur central en fonction de la préparation des commandes, approche d'un emplacement de rayonnage (6) et
1.4 qu'un agent de chargement (17) avec au moins un appareil de contrôle sans fil (25, 26) accompagne le robot de transport
1.5 et prend des objets dans des caisses de stockage (29) dans l'emplacement de stockage (30) en fonction de ce qui s'affiche sur son appareil de contrôle,
1.6 identifie ces objets à l'aide de l'appareil de contrôle (25, 26) et les dépose dans au moins une caisse de transport (22) sur le robot de transport (12-14),
1.7 et que le robot de transport répartit les caisses de transport sur un emplacement d'emballage en fonction des commandes.

2. Procédé selon la revendication 1, **caractérisé en ce que** le robot de transport traite les ordres de préparation de commande avec une optimisation de la distance et les répartit sur l'emplacement d'emballage (8) correspondant en fonction des commandes.

3. Procédé selon la revendication 2, **caractérisé en ce que** la préparation des commandes avec une optimisation de la distance pour l'emballage d'objets dans des boîtes d'emballage a lieu grâce au fait que les agents de chargement associés aux allées de rayonnage individuelles ne chargent sur les caisses de transport associées que des produits et des objets de même type qui sont associés à des ordres de préparation de commande différents et qui se trouvent dans cette allée, et les robots de transport répartissent les caisses de transport sur un emplacement d'emballage en fonction des ordres.

4. Procédé selon l'une des revendications 1 à 3, **caractérisé en ce que** l'appareil de contrôle sans fil (25, 26) est un scanner, en particulier un scanner manuel (25) avec un affichage (26).

5. Procédé selon l'une des revendications 1 à 4, **caractérisé en ce que** le robot de transport (12-15) est activé grâce à un geste de la main de l'agent de chargement (17) à travers un dispositif photoélectrique (53) sur le robot de transport (12-15), ou grâce à l'actionnement d'un bouton-poussoir par l'agent (17).

6. Procédé selon l'une des revendications 1 à 5, **caractérisé en ce que** le robot de transport (12-15) signale, grâce à l'allumage d'un affichage correspondant (28) dans la zone de la caisse de transport (22) posée sur lui, qu'un ordre de chargement, est nécessaire à cet endroit.

7. Procédé selon l'une des revendications 1 à 6, **caractérisé en ce qu'**il est prévu pour chaque robot de transport (12-15) plusieurs caisses de transport (22) qui sont prévues chacune pour un seul ordre de préparation de commande, étant précisé qu'il peut s'agir d'ordres de préparation de commande identiques ou différents.

8. Procédé selon l'une des revendications 1 à 7, **caractérisé en ce que** plusieurs caisses de transport (22) dont le chargement est terminé sont amenées sur plusieurs robots de transport différents (12-15) jusqu'à une seule station d'emballage (8), et ces caisses de transport (22) sont renversées par un convoyeur transversal (21), disposé sur les robots de transport (12-15), sur l'emplacement d'emballage (8a, 8b, 8c) où il y a un emballeur (20).

9. Procédé selon l'une des revendications 1 à 8, **caractérisé en ce que**, quand l'emplacement d'emballage (8a, 8b, 8c) a été entièrement chargé avec les objets requis, le bon de livraison (46) est imprimé par une imprimante (45) et l'emballeur (20) met dans une boîte d'emballage associée (42, 43) les objets qui se trouvent sur l'emplacement d'emballage (8a, 8b, 8c) et joint le bon de livraison (46) imprimé.

10. Procédé pour préparer les commandes et emballer des objets dans des boîtes d'emballage (42, 43) à partir d'un stock, étant précisé que des robots de transport (12-14) sont aptes à se déplacer, en étant commandés en fonction de la préparation des commandes, sur un système de transport sur rails (1) avec des tronçons de rails (2-5), que les robots de transport (12-14) approchent d'un emplacement de rayonnage (6), viennent chercher sur celui-ci les objets et les amènent jusqu'à un emplacement d'emballage (8), qu'il est prévu entre l'emplacement de rayonnage (6) et l'emplacement d'emballage (8) un emplacement de chargement (7), et que les étapes suivantes sont exécutées :
a) le robot de transport (12-14) reçoit de l'ordinateur central l'ordre de déplacement,
b) le robot de transport (12-14) se déplace jusqu'aux stations de chargement (7),
c) où l'agent de chargement (17) charge la caisse (22) du robot de transport (12-14) suivant l'ordre de chargement sur le scanner manuel (25),
d) l'opération de chargement est terminée selon l'affichage de scanner (26) et le robot de transport (12-14) se déplace jusqu'à l'emplacement d'emballage (8),
e) à l'emplacement d'emballage (8), la caisse (22) remplie est déchargée,
f) contrôle pour voir si l'emplacement d'emballage (8) a bien tous les objets,
g) le robot de transport (12-14) quitte l'emplacement d'emballage (8) et envoie à l'ordinateur central (15) un message d'exécution,
h) l'emplacement d'emballage (8) attend d'autres robots de transport (12-14) chargés,
i) au cas où l'emplacement d'emballage (8) est entièrement chargé, l'imprimante (45) imprime le bon de livraison (46) pour signaler que le chargement est terminé,
j) l'emballeur (20) prend les objets dans les caisses de l'emplacement d'emballage (8) et les dépose dans une boîte (42, 43),
k) le bon de livraison (46) est déposé dans la boîte (42, 43) et la boîte (42, 43) est posée sur une bande transporteuse (38),
l) l'emballeur (20) pose sur une bande transporteuse les caisses (22) vides, qui sont poussées sur un robot de transport (12-14) pour démarrer un nouvel ordre.
